# EUROPÄISCHE PATENTSCHRIFT

(11) **EP 3 770 467 B1**
(45) Veröffentlichungstag und Bekanntmachung des Hinweises auf die Patenterteilung: **15.12.2021**
(21) Anmeldenummer: 20184007.1
(22) Anmeldetag: 03.07.2020
(51) Int. Cl.: F16H 63/18, F16H 61/28, F16H 61/688

(54) **VERFAHREN ZUR KALIBRIERUNG MINDESTENS EINER SCHALTWALZE SOWIE GETRIEBESTEUERUNG**
METHOD FOR CALIBRATING AT LEAST ONE SHIFT DRUM AND TRANSMISSION CONTROL
PROCÉDÉ D'ÉTALONNAGE D'AU MOINS UN TAMBOUR DE CHANGEMENT DE VITESSE, AINSI QUE SYSTÈME DE COMMANDE DE TRANSMISSION

(30) Priorität: 24.07.2019 DE 102019210988
(43) Veröffentlichungstag der Anmeldung: 27.01.2021
(73) Patentinhaber: Magna PT B.V. & Co. KG, 74199 Untergruppenbach (DE)
(72) Erfinder: HENNINGER, Michael, 71638 Ludwigsburg (DE); OTT, Mario, 70839 Gerlingen (DE); PROST, Jacques, 74074 Heilbronn (DE)
(74) Vertreter: Rausch, Gabriele

(56) Entgegenhaltungen:
- WO-A1-2016/020590
- DE-A1- 19 953 937
- DE-A1-102007 050 659
- DE-A1-102016 124 403
- DE-A1-102017 127 939
- FR-A1- 3 069 607

## Beschreibung

Die Erfindung betrifft ein Verfahren zur Kalibrierung mindestens einer drehbaren Schaltwalze in einem Antriebsstrang eines Kraftfahrzeugs, wobei der Antriebsstrang einen Verbrennungsmotor und ein Getriebe und mindestens ein Steuergerät umfasst und die Schaltwalze gegen ein Drehen in zumindest eine der beiden Drehrichtungen begrenzt ist, wobei die Schaltwalze zur Kalibrierung der Drehposition in einem ersten Verfahrensschritt in eine der beiden Drehrichtungen bis zur Begrenzung gedreht wird, wobei diese Drehposition im Steuergerät als Endanschlagsposition gespeichert wird.

Die Erfindung betrifft des Weiteren eine Getriebesteuerung.

### Stand der Technik

Kraftfahrzeuggetriebe, die mittels Schaltwalzen geschaltet werden, sind insbesondere automatisierte Getriebe in Vorgelegebauweise, also insbesondere automatisierte Schaltgetriebe mit einer einzelnen Trennkupplung zwischen einem Antriebsmotor und dem Getriebe, sowie sogenannte Doppelkupplungsgetriebe, die zwei parallele Leistungsübertragungsstränge aufweisen. Jeder der Leistungsübertragungsstränge beinhaltet dabei eine Trennkupplung und ein Teilgetriebe. Das eine Teilgetriebe ist den geraden Gangstufen zugeordnet, das andere Teilgetriebe den ungeraden Gangstufen. Durch überschneidende Betätigung der zwei Trennkupplungen können Gangwechsel zugkraftunterbrechungsfrei durchgeführt werden.
In derartigen Kraftfahrzeuggetrieben sind benachbarte Gangstufen um einen Gangstufensprung voneinander beabstandet, also beispielsweise die Gangstufen 3 und 4 oder die Gangstufen 6 und 7.

Bei Doppelkupplungsgetrieben, die mittels Schaltwalzen geschaltet werden, ist es bevorzugt, wenn jedem Teilgetriebe eine eigene Schaltwalze zugeordnet ist. In diesem Fall können die Gangstufen der zwei Teilgetriebe unabhängig voneinander ein- und ausgelegt werden. Hierdurch kann bei einer Leistungsübertragung über ein Teilgetriebe in dem anderen Teilgetriebe eine Anschlussgangstufe vorgewählt werden, indem diese Gangstufe in diesem anderen - passiven - Teilgetriebe mittels der zugeordneten Schaltwalze geschaltet wird.

Bei einem Doppelkupplungsgetriebe, das aus dem Dokument DE 10 2004 058 475 A1 bekannt ist, weist eine Schalteinrichtung für die zwei Teilgetriebe zwei Schaltwalzen auf, von denen eine Schaltwalze den Gangstufen R, 2, 4, 6 zugeordnet ist und von denen die andere Schaltwalze den Gangstufen 1, 3, 5, 7 zugeordnet ist. Dabei weist jede der Schaltwalzen jeweils zwei Schaltkonturen auf, wobei die Schaltkonturen jeweils einem der zwei Teilgetriebe zugeordnet ist.

Aus der DE 10 2013 002 330 A1 ein Verfahren zum Betreiben eines hybridisierten Doppelkupplungsgetriebe-Antriebsstranges bekannt, der einen Verbrennungsmotor,
eine Doppelkupplungsanordnung mit einer ersten und einer zweiten Reibkupplung, ein erstes Teilgetriebe, ein zweites Teilgetriebe sowie eine elektrische Maschine aufweist, die an den Eingang von einem der Teilgetriebe angebunden oder damit verbindbar ist, wobei in einem hybridischen Betrieb, bei dem (i) Antriebsleistung von der elektrischen Maschine über das eine Teilgetriebe übertragen wird, (ii) Antriebsleistung von dem Verbrennungsmotor über dasselbe oder das andere Teilgetriebe übertragen wird und (iii) die dem einen Teilgetriebe zugeordnete Reibkupplung geöffnet ist, eine Quellgangstufe in dem einen Teilgetriebe ausgelegt wird, mit den Schritten: Schließen der dem einen Teilgetriebe zugeordneten Reibkupplung, so dass diese Reibkupplung ein Drehmoment übertragen kann, das dem von der elektrischen Maschine bereitgestellten Antriebsmoment entspricht, und Auslegen der Quellgangstufe in dem einen Teilgetriebe.

Aus der DE 10 2016 124 403 A1 sind Schaltwalzen für ein automatisiertes Fahrzeuggetriebe bekannt, wobei die Schaltwalzen Schaltkonturen aufweisen, die in Umfangsrichtung jeweils mit zwei Enden versehen sind und über die die Schaltwalzen jeweils kalibriert bzw. referenziert werden können, indem ein Mitnehmer gegen den Anschlag gefahren wird.

Wenn die Getriebesteuerung die Position der Schaltwalze verliert, kann die Getriebesteuerung durch gezieltes Anfahren der Anschläge eine Neukalibrierung durchführen. Diese Kalibrierung erfolgt allerdings nur bei einem stehenden Fahrzeug, bei dem zu dem die Betätigung der Bremse abgefragt wird. Des Weiteren sollte sich der Verbrennungsmotor im Leerlauf befinden, um eine sichere Spannungsversorgung für die Kalibrierung und für die Getriebeströmung zur Verfügung zu stellen.
Die Schaltwalze wird zur Kalibrierung gedreht und zwar an den oberen und an den unteren Anschlag. Diese Kalibrierung dauert 4-5 Sekunden pro Schaltwalze. Da während der Drehung der Schaltwalze alle Gänge geschaltet werden, treten Geräuschen und Vibrationen im Getriebe auf.
FR 3 069 607 A1 zeigt ein Verfahren zum automatischen Rückstellen der Position einer Schaltwalze eines Doppelkupplungsgetriebes, wobei die Position der Schaltwalze automatisch auf die Position einer ersten Antriebswelle zurückgestellt wird, wenn das Fahrzeug angetrieben wird, nachdem ein Fehler beim Einlegen eines mit einer ersten Primärwelle verbundenen Zahnrads festgestellt wurde, und dass die Schaltwalze automatisch auf die Position einer zweiten Antriebswelle zurückgestellt wird, wenn das Fahrzeug angetrieben wird. Es wird ein Testzahnrad mit der ausgefallenen Schaltwalze in Eingriff gebracht und man bestimmt aus einer Messung der Geschwindigkeit der Antriebswelle das Testzahnrad, das in Eingriff gebracht wird, um eine Rückstellung dieser Schaltwalze durchzuführen.

Es ist daher Aufgabe der Erfindung ein Verfahren zur Kalibrierung von Schaltwalzen zur Verfügung zu stellen, dass auch in anderen Fahrzeugbedingungen als einem Stillstand zuverlässig und schnell erfolgen kann.

### Beschreibung der Erfindung

Die Aufgabe wird gelöst mit einem Verfahren zur Kalibrierung mindestens einer drehbaren Schaltwalze in einem Antriebsstrang eines Kraftfahrzeugs, wobei der Antriebsstrang einen Verbrennungsmotor und ein Getriebe und mindestens ein Steuergerät umfasst und die Schaltwalze gegen ein Drehen in eine der beiden Drehrichtungen begrenzt ist, wobei die Schaltwalze zur Kalibrierung der Drehposition in einem ersten Verfahrensschritt in eine der beiden Drehrichtungen bis zur Begrenzung gedreht wird, wobei diese Drehposition im Steuergerät als Endanschlagsposition gespeichert wird, wobei die eine gespeicherte Endanschlagsposition einer Verifizierung unterzogen wird.

Als Schaltwalze wird dabei ein Drehglied bezeichnet, das unterschiedliche, dem Fachmann bekannte Ausführungsformen, beispielsweise als Drehspindel etc aufweisen kann.

Die Begrenzung ist beispielsweise ein Endanschlag, der an beiden Enden Schaltnuten mechanisch begrenzt.

Der Vorteil des erfindungsgemäßen Verfahrens besteht darin, dass nur eine Endanschlagsposition für die Kalibrierung verwendet wird. Es wird nicht wie bisher im Stand der Technik üblich eine erste und eine zweite Endanschlagsposition angefahren, sondern nur eine Endanschlagsposition, der die aber in einem zweiten Verfahrensschritt verifiziert wird. Durch den Verifizierungsschritt wird sichergestellt, dass keine Verblockung des Getriebes oder der Schaltwalze vorliegt, die zu einer falschen Messung führen würde.

Das erfindungsgemäße Verfahren kann in jedem Typ von Getriebe angewendet werden, besonders vorteilhaft ist es aber bei der Kalibrierung der Schaltwalzen in einem Doppelkupplungsgetriebe mit einem ersten Teilgetriebe (TG1), das eine elektrische Maschine (EM) integriert aufweist, und einem zweitem Teilgetriebe (TG2), wobei die Bestimmung der einen Endanschlagsposition mit anschließender Verifizierung in jeweils einem der Teilgetriebe unter unterschiedlichen Fahrbedingungen erfolgt.

Die Kalibrierung kann in einem solchen hybridisierten Doppelkupplungsgetriebe für beide Teilgetriebe eingesetzt werden, wobei jeweils nur eine Endanschlagsposition angefahren wird.

Die Verifizierung der gespeicherten Endanschlagposition erfolgt, in dem der Antriebsstrang das Getriebe mit einem Drehmoment beaufschlagt und danach die Schaltwalze erneut in die bereits im ersten Verfahrensschritt gewählte Drehrichtung bis zur Begrenzung zu drehen, wobei die zweite Messung der Endanschlagsposition im Steuergerät gespeichert wird, wenn die zweite Messung der Endanschlagsposition der im ersten Verfahrensschritt gespeicherten Endanschlagsposition gleicht.

Für den Verifizierungsschritt muss die Schaltwalze von der Begrenzung, die zur Verwendung einer ersten Messung der Endanschlagsposition verwendet wird, für eine kurze Zeit durch das Getriebe wegbewegt werden. Erst dann kann die Schaltwalze wieder in derselben Drehrichtung auf die Begrenzung hinbewegt werden, und eine zweite Messung der Endanschlagsposition vorgenommen werden.

Es ist von Vorteil, dass die Schaltwalze erfindungsgemäß in Abhängigkeit der Fahrzeuggeschwindigkeit für den ersten Verfahrensschritt in die erste oder in die zweite Drehrichtung gedreht wird, weil die Kalibrierung bereits erfolgt, wenn eine einzige Endanschlagsposition bestimmt und verifiziert ist.

In einer vorteilhaften Steuerungsstrategie wird im ersten Verfahrensschritt in die erste Drehrichtung gedreht, wenn das Kraftfahrzeug stillsteht oder unter eine Schwellgeschwindigkeit bewegt wird oder in die zweite Drehrichtung gedreht, wenn sich das Kraftfahrzeug bewegt.

Eine weitere vorteilhafte Steuerungsstrategie beinhaltet, dass die Schaltwalze im ersten Verfahrensschritt in Abhängigkeit einer Fahrerwählhebelposition entweder in die erste oder in die zweite Drehrichtung zu drehen.

Beispielsweise kann eine Fahrerwählhebelposition N, R oder P zu einer ersten Drehrichtung führen, die Wählhebelposition D zu einer zweiten Drehrichtung.

In einer Ausführungsform ist es notwendig, dass die Verifizierung durchgeführt wird, wenn sich das Fahrzeug mit mehr als 10 km/h bewegt. Die Kupplung kann dabei eine reib- oder formschlüssige Kupplung sein.

Zur Durchführung der Kalibrierung ist entweder der Verbrennungsmotor oder die elektrische Maschine mittels einer Kupplung mit dem Getriebe koppelbar.

Zur Kalibrierung werden die Kupplungen schlupfend betrieben, um ein kurzfristiges Drehmoment aufzubringen und einen eventuell vorhandenen Blockierungszustand zu lösen.

Ausgelöst wird das Verfahren, wenn die Schaltwalzenposition nach einem Zurücksetzen des Steuergeräts unbekannt ist.

Das Verfahren zur Kalibrierung an einer der beiden Schaltwalzen der Teilgetriebe wird durchgeführt, wenn sich das jeweils der zu kalibrierenden Schaltwalze zugeordnete Teilgetriebe in einem passiven Zustand befindet.

Unter passiven Zustand eines Teilgetriebes versteht man das Teilgetriebe, das gerade nicht aktiv im Antriebsstrang antreibt. Vorteilhafterweise wird in Bewegung des Fahrzeugs ein hoher Gang in dem Teilgetriebe eingelegt, in dem die Schaltwalzenposition zu bestimmen ist, während das Fahrzeug mit dem anderer Teilgetriebe fährt.

Das Verfahren zum Kalibrieren wird dann abgebrochen, wenn das Kraftfahrzeug stillsteht und wenn das Bremspedal gelöst wird.

Die Aufgabe wird weiterhin gelöst mit einer Getriebesteuerung für ein Doppelkupplungsgetriebe mit einem ersten Teilgetriebe, das eine elektrische Maschine integriert aufweist, und einem zweitem Teilgetriebe, mit einem Steuergerät zur erfindungsgemäßen Kalibrierung mindestens einer Schaltwalze eines Teilgetriebes, wobei das Steuergerät Steuerungsmodule enthält, die je nach Fahrzeugbetriebszustand in vier Submodule aufgeteilt sind.

Beim bewegten Fahrzeug erfolgt die Kalibrierung in einem Teilgetriebe, durch Annäherung an den oberen Anschlag der jeweiligen Schaltwalze, während das jeweils, andere Untergetriebe das Fahren übernimmt.

### Beschreibung der Figuren

Figur 1 zeigt ein hybridisiertes Doppelkupplungsgetriebe aus dem Stand der Technik,
Figur 2 zeigt einen Entscheidungsbaum zur Festlegung der Submodule der Kalibrierungsschritte,
Figur 3 zeigt die Anpassung mit der Kupplung im Stillstand,
Figur 4 zeigt die Anpassung mit der elektrischen Maschine im Stillstand,
Figur 5 zeigt die Anpassung mit der elektrischen Maschine im Fahrbetrieb,
Figur 6 zeigt die Anpassung mit Kupplung im Fahrbetrieb.

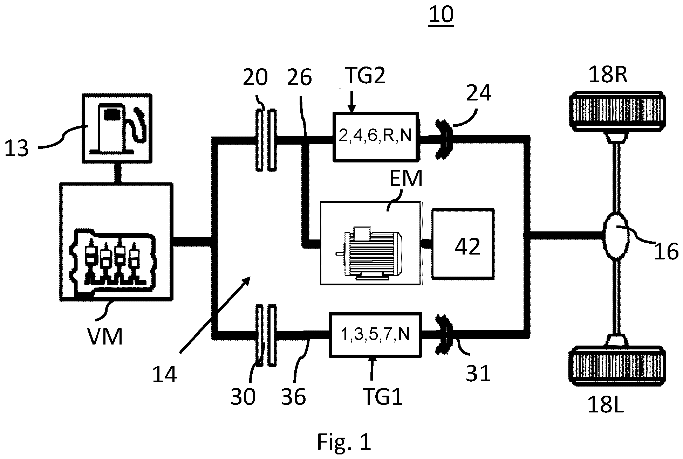

Der Antriebsstrang 10 nach Figur 1 beinhaltet einen Antriebsmotor VM, beispielsweise in Form eines Verbrennungsmotors, der aus einem Energiespeicher wie einem Kraftstofftank 13 versorgt wird. Ferner beinhaltet der Antriebsstrang 10 ein Doppelkupplungsgetriebe 14, dessen Abtriebsseite mit einem Differential 16 verbunden ist. Das Differential 16 verteilt Antriebsleistung auf ein linkes und ein rechtes angetriebenes Rad 18L, 18R.
Das Doppelkupplungsgetriebe 14 beinhaltet eine zweite Reibkupplung 20 sowie ein zweites Teilgetriebe TG2. Das zweite Teilgetriebe TG2 beinhaltet beispielsweise Gangstufen N, 2, 4, 6, R, die mittels schematisch angedeuteter Schaltkupplungen 24 ein- und auslegbar sind. Die zweite Reibkupplung 20 und das zweite Teilgetriebe TG2 bilden einen zweiten Leistungsübertragungspfad 26 zur Übertragung von Leistung von dem Antriebsmotor VM zu dem Differential 16.
Das Doppelkupplungsgetriebe 14 beinhaltet ferner eine erste Reibkupplung 30 sowie ein erstes Teilgetriebe TG1. Das erste Teilgetriebe TG1 beinhaltet beispielsweise die ungeraden Gangstufen N, 1, 3, 5, 7 etc., die mittels zugeordneter Schaltkupplungen 31 ein- und auslegbar sind. Die erste Reibkupplung 30 und das erste Teilgetriebe TG1 bilden einen ersten Leistungsübertragungspfad 36 zur Übertragung von Antriebsleistung von dem Antriebsmotor VM zu dem Differential 16.
Ferner beinhaltet der Antriebsstrang 10 eine elektrische Maschine EM, die mit einer Anordnung 42 zur Ansteuerung und Energieversorgung verbunden ist. Die Anordnung 42 kann beispielsweise eine Leistungselektronik sowie eine Batterie beinhalten. Eventuell ist auch die Getriebesteuerung integriert.
Die elektrische Maschine EM ist an das zweite Teilgetriebe TG2 fest angebunden, beispielsweise mittels eines Stirnradsatzes oder dergleichen.

Zur Betätigung der Schaltung sind Schaltwalzen für jedes Teilgetriebe TG1, TG2 vorgesehen, die von Aktuatoren angetrieben sind. Die Steuerung des Doppelkupplungsgetriebes, also auch der Aktuatoren der Schaltwalzen und der elektrischen Maschine erfolgt in einer Getriebesteuerung, die eben auch in der Anordnung 42 sitzen kann.

Das Getriebe weist zudem als Interface einen Fahrerwählhebel auf, mit dem der Fahrer Fahrzustände wie N= Neutral, P= Parken, R= Rückwärtsfahren und D=Drive vorwählt.

Das erfindungsgemäße Verfahren zur Kalibrierung von Schaltwalzen ist ein Steuerungsmodul, ein Softwaremodul der Getriebesteuerungssoftware.

Das Verfahren ist für alle Fahrgeschwindigkeiten des Fahrzeugs anwendbar. Allerdings ist eine Differenzierung basierend auf dem Fahrzustand des Fahrzeuges notwendig, um unterschiedliche Submodule der Steuerungsmoduls zu starten.

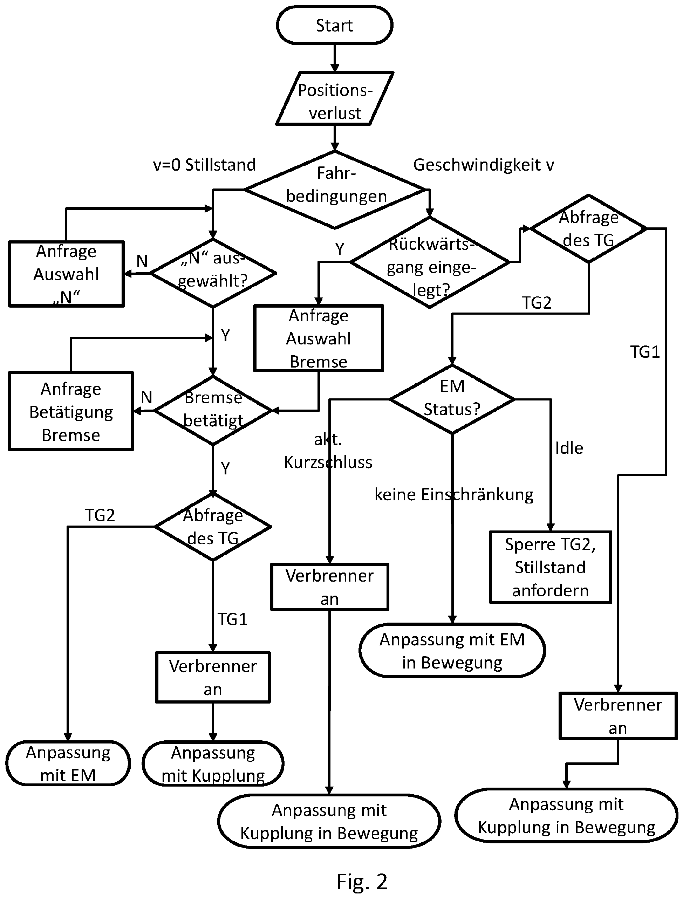

Die Festlegung des an den Betriebszustands des Fahrzeugs angepassten Submoduls erfolgt über den Entscheidungsbaum nach Figur 2.

Das Verfahren startet prinzipiell mit der Feststellung eines Positionsverlusts, was in der Getriebesteuerung als Fehlfunktion erkannt wird.

In einem ersten Schritt überprüft die Steuerung die Fahrbedingungen und unterscheidet, ob das Fahrzeug sich im Stillstand oder nahezu im Stillstand mit einer Restgeschwindigkeit unter einem Schwellwert befindet oder sich mit einer Geschwindigkeit v bewegt.
Befindet sich das Fahrzeug im Stillstand, erfolgen die nächsten Schritte entsprechend der linken Seite des Diagramms. Es wird abgefragt, ob sich das Getriebe in einer Neutralstellung befindet und der Gang N eingelegt ist. Ist der Gang N nicht eingelegt erfolgt im Steuerungsmodul die Anforderung, die Neutralstellung über den Fahrerwählhebel einzulegen und der Prozess kann nach positiver Abfrage weiterlaufen. Im nächsten Prozessschritt wird abgefragt, ob die Bremse betätigt ist.

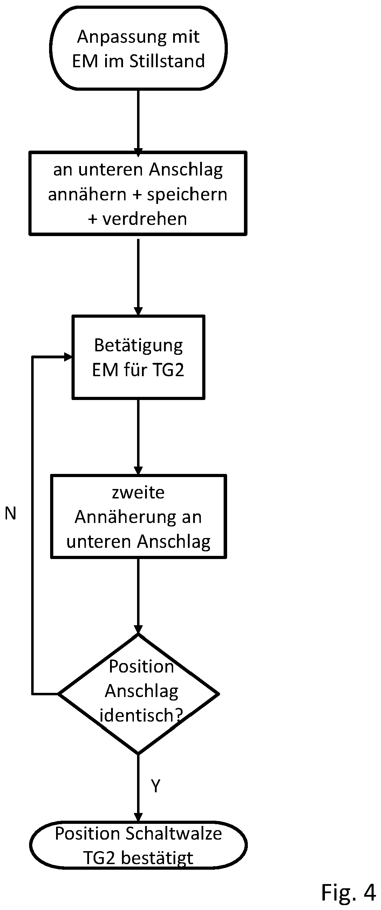

Auch in diesem Schritt gibt es die Schleife bei einer negativen Feststellung, die Betätigung der Bremse anzufordern und dem Prozess dann nach erfolgter Betätigung der Bremse weiter zu verfolgen.
Im nächsten Schritt wird abgefragt, welches Teilgetriebe bzw. welche Schaltwalze in welchem Teilgetriebe kalibriert werden soll. Mit der Entscheidung für ein Teilgetriebe entscheidet sich die weitere Verwendung eines Submoduls. Für das Teilgetriebe TG2, in dem sich die elektrische Maschine befindet, wird das Submodul Anpassung mit elektrischer Maschine im Stillstand nach Figur 4 aufgerufen.

Im Stillstand wird der untere mechanische Anschlag der Schaltwalze angefahren, da dieser Anschlag näher am ersten Gang liegt. Dabei nähert sich die Position der Schaltwalze durch Drehen dem unteren mechanischen Anschlag. Die Drehposition beim Erreichen des unteren Anschlags wird gespeichert. Die Schaltwalze wird geringfügig zurückgedreht. Die elektrische Maschine EM im Teilgetriebe TG 2 verdreht anschließend den Radsatz des Teilgetriebes TG2 für eine kurze Zeit, um einen gegebenenfalls verblockten Gang zu lösen. Anschließend wird der untere Anschlag in Drehrichtung der ursprünglichen Annäherung erneut angefahren. Wenn die beiden Messungen der Endanschlagspositionen übereinstimmend sind, wird die Position der Schaltwalze für die Getriebesteuerung bestätigt und die Kalibrierung ist erfolgreich beendet. In der Steuerungssoftware ist dabei vorgegeben, in welcher Genauigkeit die beiden Messungen übereinstimmen müssen, um eine erfolgreiche Verifizierung darzustellen.

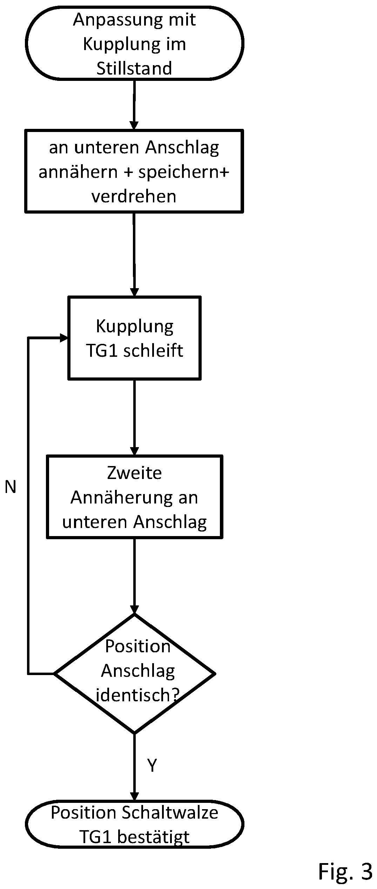

Sollte die Schaltwalze im Teilgetriebe TG 1 kalibriert werden, wird der Verbrennungsmotor gestartet und das Submodul Anpassung mit Verbrennungsmotor und Kupplung nach Figur 3 aufgerufen.

Dabei nähert sich die Position der Schaltwalze durch Drehen dem unteren mechanischen Anschlag. Die Drehposition beim Erreichen des unteren Anschlags wird gespeichert. Die Schaltwalze wird geringfügig zurückgedreht. Die Kupplung 30 des Teilgetriebes TG 1 wird eine kurze Zeit angesteuert bis sie schleift, um einen gegebenenfalls verblockten Gang zu lösen. Anschließend wird der untere Anschlag in Drehrichtung der ursprünglichen Annäherung erneut angefahren. Wenn die beiden Messungen der Endanschlagspositionen übereinstimmend sind, wird die Position der Schaltwalze für die Getriebesteuerung bestätigt und die Kalibrierung ist erfolgreich beendet.

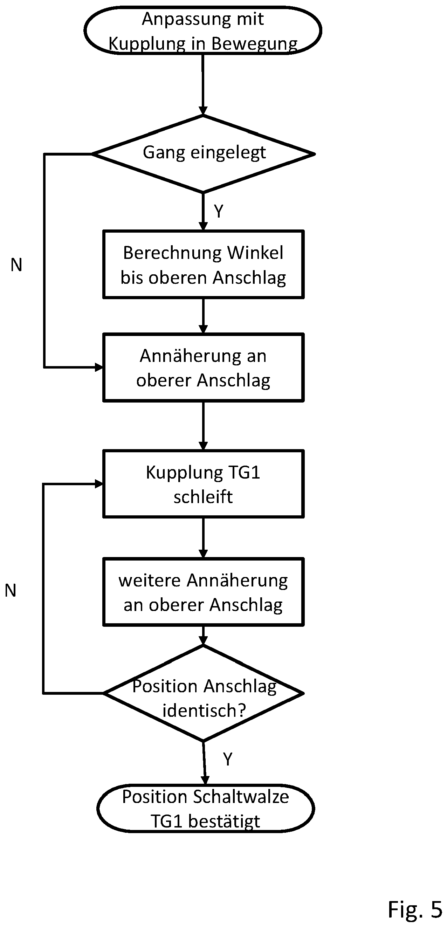

Die beiden bisher beschriebenen Submodule des Steuerungsmoduls werden beim stehenden Fahrzeug eingesetzt. Bei einem bewegten Fahrzeug werden weitere Submodule aufgerufen.
Zunächst wird in der Steuerung abgefragt, ob der Rückwärtsgang eingelegt ist. Sollte die Abfrage positiv sein wird eine Anforderung ausgegeben die Bremse zu betätigen wodurch die Fahrbedingungen eines stehenden Fahrzeugs erreicht wird und das Verfahren mit denen Steuerungsmodul für das stehende Fahrzeug weiter durchgeführt wird.
Ist kein Rückwärtsgang eingelegt erfolgt die Abfrage, welches Teilgetriebe kalibriert werden muss.
Soll die Schaltwalze im Teilgetriebe TG 1 kalibriert werden, wird der Verbrennungsmotor gestartet und das Submodul Anpassung mit Kupplung in Bewegung nach Figur 5 aufgerufen.
In einem ersten Schritt wird geprüft, welcher Gang eingelegt ist, wobei diese Messung durch Berechnung des Verhältnisses von Raddrehzahl zu Drehzahl der Eingangswelle erfolgt.

Anschließend wird eine Berechnung durchgeführt, um den Winkel zu bestimmen, den die Schaltwalze drehen muss, um an den oberen Anschlag der Schaltwalze zu gelangen. Anschließend wird die Schaltwalze in Richtung auf den oberen Anschlag gedreht. Die Drehposition beim Erreichen des unteren Anschlags wird gespeichert. Die Schaltwalze wird geringfügig zurückgedreht.

Um einen möglichen Verblockungszustand aufzulösen, wird die Kupplung des Teilgetriebes TG1 bis zum Schleifpunkt geschlossen und ein Drehmoment auf das Teilgetriebe aufgebracht. Die Schaltwalze wird danach nochmals bis zum oberen Anschlag gedreht. Wiederum wird abgefragt, ob die beiden gemessenen Positionen des Endanschlags übereinstimmen und so die Position der Schaltwalze im Teilgetriebe TG 1 bestätigen.

Für höhere Geschwindigkeiten und den Verlust einer Walzenposition sollte das jeweilige Teilgetriebe das Fahren übernehmen, in dem keine Kalibrierung durchzuführen ist.

Für eine Kalibrierung der Schaltwalze im Teilgetriebe TG 2 wird der Status der elektrischen Maschine EM abgefragt.
Ist die elektrische Maschine aktiv kurzgeschlossen wird der Verbrennungsmotor gestartet. Das Sub-Modul "Anpassung der Schaltwalzenposition mit Verbrennungsmotor und Kupplung" nach Figur 5 wird aufgerufen.

Im Falle eines aktiven Kurzschlusses sollte der Verbrennungsmotor aktiv sein, um das Teilgetriebe TG2 durch ein kurzes Einkuppeln zu drehen und die Position des oberen Anschlags durch eine zweite Annäherung an den Anschlag zu validieren. Um sicherzustellen, dass die gefundene Position des Anschlags der Schaltwalze korrekt ist, wird daher das Getriebe verdreht, um eventuelle Zahn-Zahn-Stellungen aufzulösen.

Befindet sich die elektrische Maschine in einem Idle-Zustand wird das Teilgetriebe TG2 gesperrt und ein Stillstand des Fahrzeugs angefordert, um die Schaltwalze in diesem Zustand zu kalibrieren.

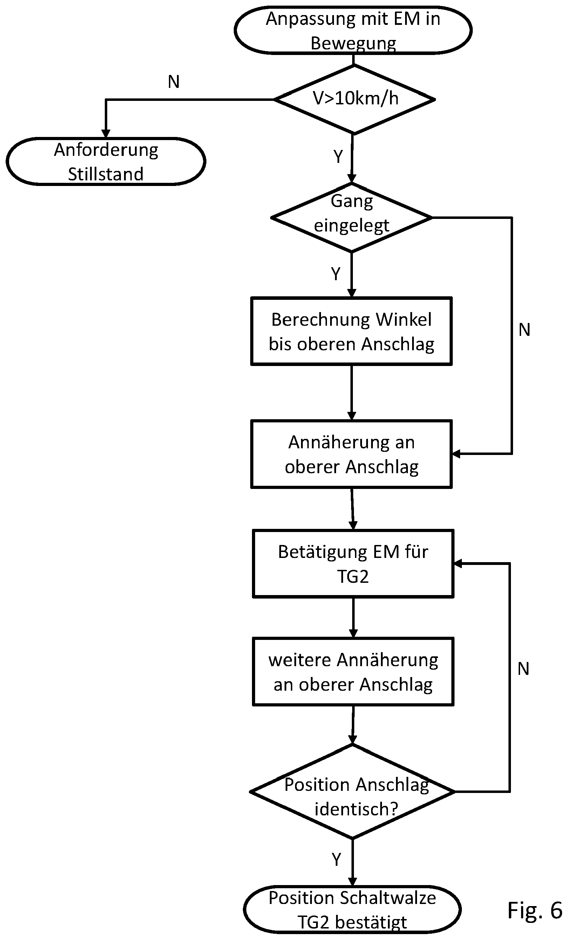

Befindet sich die elektrische Maschine EM in einem normalen Betrieb wird ein Submodul Anpassung mit der elektrischen Maschine in Bewegung nach Figur 6 aufgerufen. Als erstes wird die Geschwindigkeit abgefragt.

Bei langsamer Geschwindigkeit unterhalb von 10 km/h oder einer Rückwärtsfahrt ist es nicht möglich, die Schaltwalze des Teilgetriebes TG 2 zu kalibrieren. Daher wird hier von der Steuerung eine Anforderung, dass Fahrzeug stillstehen zu lassen ausgegeben.

Befindet sich das Fahrzeug oberhalb einer Geschwindigkeit von 10 km/h wird geprüft, welcher Gang eingelegt ist, was wieder anhand des Verhältnisses zwischen Raddrehzahl und Drehzahl der Eingangswelle erfolgt. Anschließend erfolgt die Berechnung des Winkels einer Annäherung an den oberen Anschlag, wenn ein Gang eingelegt ist. Dabei wird wieder der obere Anschlag der Schaltwalze verwendet. Ist kein Gang eingelegt erfolgt die Annäherung an den oberen Anschlag direkt. Die Drehposition beim Erreichen des unteren Anschlags wird gespeichert. Die Schaltwalze wird geringfügig zurückgedreht.

Anschließend wird die elektrische Maschine betätigt und das Teilgetriebe TG 2 noch mal verdreht. Wieder erfolgt eine Annäherung an den oberen Anschlag, um zu überprüfen ob die beiden Endanschlagspositionen gleich sind und so verifiziert sind.

Die Submodule sind Teil einer Software, die als Steuermodul in die Getriebesteuerung integriert ist, wobei die Getriebesteuerung mindestens aus elektronischen Komponenten und darauf ausgeführter Software besteht. Die Getriebesteuerung kann als eigenständigen Komponente für das Getriebe ausgestaltet sein oder in einer anderen Steuereinheit des Fahrzeugs integriert vorliegen.

## Patentansprüche

1. Verfahren zur Kalibrierung mindestens einer drehbaren Schaltwalze in einem Antriebsstrang eines Kraftfahrzeugs, wobei der Antriebsstrang einen Verbrennungsmotor und ein Getriebe und mindestens ein Steuergerät umfasst und die Schaltwalze gegen ein Drehen in eine der beiden Drehrichtungen begrenzt ist, wobei die Schaltwalze zur Kalibrierung der Drehposition in einem ersten Verfahrensschritt in eine der beiden Drehrichtungen bis zur Begrenzung gedreht wird, wobei diese Drehposition im Steuergerät als Endanschlagsposition gespeichert wird, **gekennzeichnet dadurch, dass** die eine gespeicherte Endanschlagsposition einer Verifizierung unterzogen wird und dass die Schaltwalze in Abhängigkeit der Fahrzeuggeschwindigkeit für den ersten Verfahrensschritt in die erste oder in die zweite Drehrichtung gedreht wird.

2. Verfahren zur Kalibrierung mindestens einer der Schaltwalzen nach Anspruch 1 in einem Doppelkupplungsgetriebe mit einem ersten Teilgetriebe (TG1), das eine elektrische Maschine (EM) integriert aufweist, und einem zweitem Teilgetriebe (TG2), wobei die Bestimmung der einen Endanschlagsposition mit anschließender Verifizierung in jeweils einem der Teilgetrieben (TG1, TG2) mit der jeweiligen Schaltwalze unter unterschiedlichen Fahrbedingungen erfolgt.

3. Verfahren zur Kalibrierung nach Anspruch 1 oder 2, **dadurch gekennzeichnet, dass** die Verifizierung der gespeicherten Endanschlagposition erfolgt, in dem der Antriebsstrang das Getriebe mit einem Drehmoment beaufschlagt und danach die Schaltwalze erneut in die bereits im ersten Verfahrensschritt gewählte Drehrichtung bis zur Begrenzung gedreht wird, wobei die zweite Messung der Endanschlagsposition im Steuergerät gespeichert wird, wenn die zweite Messung der Endanschlagsposition der im ersten Verfahrensschritt gespeicherten Endanschlagsposition entspricht.

4. Verfahren zur Kalibrierung einer Schaltwalze nach einem der vorhergehenden Ansprüche, **dadurch gekennzeichnet, dass** im ersten Verfahrensschritt in die erste Drehrichtung gedreht wird, wenn das Kraftfahrzeug stillsteht oder unter eine Schwellgeschwindigkeit bewegt wird und in die zweite Drehrichtung gedreht wird, wenn sich das Kraftfahrzeug bewegt.

5. Verfahren zur Kalibrierung nach einem der vorhergehenden Ansprüche, **dadurch gekennzeichnet, dass** die Verifizierung durchgeführt wird, wenn sich das Fahrzeug mit mehr als 10 km/h bewegt.

6. Verfahren zur Kalibrierung nach Anspruch 2, wobei entweder der Verbrennungsmotor (VM) oder die elektrische Maschine (EM) mittels einer Kupplung mit dem Getriebe koppelbar ist.

7. Verfahren zur Kalibrierung nach einem der vorhergehenden Ansprüche, **dadurch gekennzeichnet, dass** die Kalibrierung gestartet wird, wenn die Schaltwalzenposition nach einem Zurücksetzen des Steuergeräts unbekannt ist.

8. Verfahren zur Kalibrierung nach Anspruch 2, **dadurch gekennzeichnet, dass** das Verfahren zur Kalibrierung an einer der beiden Schaltwalzen der Teilgetriebe durchgeführt wird, wenn sich das jeweils der zu kalibrierenden Schaltwalze zugeordnete Teilgetriebe in einem passiven Zustand befindet.

9. Verfahren zur Kalibrierung nach einem der vorhergehenden Ansprüche, **dadurch gekennzeichnet, dass** das Verfahren zum Kalibrieren dann abgebrochen wird, wenn das Kraftfahrzeug stillsteht und das Bremspedal gelöst ist.

10. Getriebesteuerung für ein Doppelkupplungsgetriebe mit einem ersten Teilgetriebe (TG1), das eine elektrische Maschine (EM) integriert aufweist, und einem zweitem Teilgetriebe (TG2), mit einem Steuergerät zur Kalibrierung mindestens einer Schaltwalze eines Teilgetriebes (TG1, TG2) nach Anspruch 1, wobei das Steuergerät Steuerungsmodule enthält, die je nach Fahrzeugbetriebszustand in vier Submodule aufgeteilt sind, **dadurch gekennzeichnet, dass** beim bewegten Fahrzeug die Kalibrierung in einem Teilgetriebe (TG1, TG2) durch Annäherung an einen oberen Anschlag der jeweiligen Schaltwalze erfolgt, wobei ein unterer mechanischer Anschlag der Schaltwalze näher am ersten Gang liegt, während das jeweils nicht zu kalibrierende Teilgetriebe (TG1, TG2) das Fahren übernimmt.

## Claims

1. Method for calibrating at least one rotatable shift drum in a power train of a motor vehicle, wherein the power train comprises an internal combustion engine and a transmission and at least one control apparatus, and the shift drum is restricted in terms of rotating in one of the two rotating directions, wherein, in a first method step, the shift drum for calibrating the rotary position is rotated in one of the two rotating directions up to the restriction, wherein this rotary position is memorized as the terminal detent position in the control apparatus, **characterized in that** the one memorized terminal detent position is subjected to verification, and **in that** the shift drum for the first method step as a function of the vehicle speed is rotated in the first or the second rotating direction.

2. Method for calibrating at least one of the shift drums according to Claim 1 in a dual-clutch transmission having a first sub-transmission (TG1), which has an electric machine (EM) integrated therein, and a second sub-transmission (TG2), wherein the determination of the one terminal detent position with subsequent verification takes place in each case in one of the sub-transmissions (TG1, TG2) using the respective shift drum under different driving conditions.

3. Method for calibrating according to Claim 1 or 2, **characterized in that** the verification of the memorized terminal detent position takes place **in that** the power train impinges the transmission with a torque, and the shift drum thereupon, in the rotating direction already selected in the first method step, is rotated again up to the restriction, wherein, when the second measurement of the terminal detent position corresponds to the terminal detent position memorized in the first method step, the second measurement of the terminal detent position is memorized in the control apparatus.

4. Method for calibrating a shift drum according to one of the preceding claims, **characterized in that**, in the first method step, rotating takes place in the first rotating direction when the motor vehicle is stationary or moves below a threshold speed, and rotating takes place in the second rotating direction when the motor vehicle is in motion.

5. Method for calibrating according to one of the preceding claims, **characterized in that** the verification is carried out when the vehicle moves at more than 10 km/h.

6. Method for calibrating according to Claim 2, wherein either the internal combustion engine (VM) or the electric machine (EM) is able to be coupled to the transmission by means of a clutch.

7. Method for calibrating according to one of the preceding claims, **characterized in that** the calibration is started when the shift drum position is unknown upon resetting the control apparatus.

8. Method for calibrating according to Claim 2, **characterized in that** the method for calibrating is carried out on one of the two shift drums of the sub-transmissions when the respective sub-transmission assigned to the shift drum to be calibrated is in a passive state.

9. Method for calibrating according to one of the preceding claims, **characterized in that** the method for calibrating is aborted when the motor vehicle is stationary and the brake pedal is released.

10. Transmission control for a dual-clutch transmission having a first sub-transmission (TG1) which has an electric machine (EM) integrated therein, and a second sub-transmission (TG2), having a control apparatus for calibrating at least one shift drum of a sub-transmission (TG1, TG2) according to Claim 1, wherein the control apparatus contains control modules which, depending on the vehicle operating state, are subdivided into four sub-modules, **characterized in that** in the case of a moving vehicle the calibration in a sub-transmission (TG1, TG2) takes place by approaching an upper detent of the respective shift drum, wherein a lower mechanical detent of the shift drum is closer to the first gear, while the respective sub-transmission (TG1, TG2) not to be calibrated assumes the driving.

## Revendications

1. Procédé d'étalonnage d'au moins un tambour de changement de vitesse rotatif dans une chaîne cinématique d'un véhicule automobile, la chaîne cinématique comprenant un moteur à combustion interne et une transmission et au moins un appareil de commande, et le tambour de changement de vitesse étant limité en rotation dans l'un des deux sens de rotation, dans lequel le tambour de changement de vitesse, pour l'étalonnage de la position de rotation, est tourné jusqu'à la limite dans une première étape de procédé dans l'un des deux sens de rotation, cette position de rotation étant sauvegardée dans l'appareil de commande comme une position de butée de fin de course,
**caractérisé en ce que** la position de butée de fin de course sauvegardée est soumise à une vérification, et **en ce que** le tambour de changement de vitesse est tourné en fonction de la vitesse de véhicule pour la première étape de procédé dans le premier ou dans le deuxième sens de rotation.

2. Procédé d'étalonnage d'au moins l'un des tambours de changement de vitesse selon la revendication 1 dans une transmission à double embrayage dotée d'une première transmission partielle (TG1) qui présente une machine électrique (EM) de manière intégrée, et d'une deuxième transmission partielle (TG2), la détermination de ladite une position de butée de fin de course avec vérification consécutive ayant lieu dans respectivement l'une des transmissions partielles (TG1, TG2) avec le tambour de changement de vitesse respectif sous différentes conditions de conduite.

3. Procédé d'étalonnage selon la revendication 1 ou 2, **caractérisé en ce que** la vérification de la position de butée de fin de course est effectuée **en ce que** la chaîne cinématique soumet la transmission à un couple, et ensuite, le tambour de changement de vitesse est à nouveau tourné jusqu'à la limite dans le sens de rotation déjà sélectionné dans la première étape de procédé, la deuxième mesure de la position de butée de fin de course étant sauvegardée dans l'appareil de commande si la deuxième mesure de la position de butée de fin de course correspond à la position de butée de fin de course sauvegardée à la première étape de procédé.

4. Procédé d'étalonnage d'un tambour de changement de vitesse selon l'une quelconque des revendications précédentes, **caractérisé en ce que** dans la première étape de procédé, la rotation est effectuée dans le premier sens de rotation lorsque le véhicule automobile est à l'arrêt ou est déplacé sous une vitesse seuil, et est effectuée dans le deuxième sens de rotation lorsque le véhicule automobile se déplace.

5. Procédé d'étalonnage selon l'une quelconque des revendications précédentes, **caractérisé en ce que** la vérification est effectuée lorsque le véhicule est déplacé à plus de 10 km/h.

6. Procédé d'étalonnage selon la revendication 2, dans lequel le moteur à combustion interne (VM) ou la machine électrique (EM) peut être couplé(e) à la transmission au moyen d'un embrayage.

7. Procédé d'étalonnage selon l'une quelconque des revendications précédentes, **caractérisé en ce que** l'étalonnage est lancé lorsque la position de tambour de changement de vitesse est inconnue après une réinitialisation de l'appareil de commande.

8. Procédé d'étalonnage selon la revendication 2, **caractérisé en ce que** le procédé d'étalonnage est effectué sur l'un des deux tambours de changement de vitesse lorsque la transmission partielle associée respectivement au tambour de changement de vitesse à étalonner se trouve dans un état passif.

9. Procédé d'étalonnage selon l'une quelconque des revendications précédentes, **caractérisé en ce que** le procédé d'étalonnage est abandonné lorsque le véhicule automobile est à l'arrêt et la pédale de frein est relâchée.

10. Commande de transmission pour une transmission à double embrayage, comprenant une première transmission partielle (TG1) qui présente une machine électrique (EM) de manière intégrée, et une deuxième transmission partielle (TG2), un appareil de commande destiné à l'étalonnage d'au moins un tambour de changement de vitesse d'une transmission partielle (TG1, TG2) selon la revendication 1, l'appareil de commande comportant des modules de commande qui sont divisés en quatre sous-modules en fonction de l'état de fonctionnement de véhicule,
**caractérisée en ce que** pour le véhicule en mouvement, l'étalonnage est effectué dans une transmission partielle (TG1, TG2) en s'approchant d'une butée supérieure du tambour de changement de vitesse respectif, une butée mécanique inférieure du tambour de changement de vitesse étant plus proche de la première vitesse alors que la transmission partielle qui n'est respectivement pas à étalonner (TG1, TG2) prend en charge la conduite.
